# EUROPEAN PATENT APPLICATION

(11) **EP 2 014 956 A2**
(43) Date of publication of application: **14.01.2009**
(21) Application number: 08104678.1
(22) Date of filing: 09.07.2008
(51) Int. Cl.: F16H 59/12

(54) **A speed change operation apparatus for a vehicle**

(30) Priority: 10.07.2007 JP 2007180670
(71) Applicant: Kabushiki Kaisha Atsumitec, Yuto-cho Nishi-ku Hamamatsu-shi Shizuoka 431-0192 (JP)
(72) Inventor: Ishizu, Harumichi, Shizuoka-ken Shizuoka (JP); Tajima, Yasushi, Shizuoka-ken Shizuoka (JP)
(74) Representative: Cohausz & Florack

(57) **Abstract**

An object of the present invention is to provide a speed change operation apparatus for a vehicle which can both suppress the operation noise of the push knob and keep a necessary strength and rigidity of the push knob. According to the present invention there is provided a speed change operation apparatus for a vehicle comprising an operating lever for performing speed change operation of a transmission of a vehicle by a pivotal operation of the operating lever; an operating knob secured on the tip end of the operating lever and adapted to be gripped by a driver of vehicle; and a push knob mounted on the operation knob and adapted to be actuated by a driver to descent a lock-pin rod arranged within the operating lever characterized in that the push knob is outsert-molded by soft resin at its first portion abutting the lock-pin rod when the push knob is actuated or at its second portion abutting the operating knob after the actuation of the push knob.

## Description

### BACKGROUND OF THE INVENTION

### Field of the Invention

The present invention relates to a speed change operation apparatus for a vehicle for performing speed change operation of a transmission of a vehicle.

### Description of Background Art

The speed change operation apparatus for a vehicle has in general an operating lever pivotally supported on a body of the speed change operation apparatus and a knob mounted on the tip end of the operating lever and a driver can perform the speed change of a transmission of a vehicle by pivotally operating the operating lever with gripping the operating knob.

There has been proposed a various speed change operation apparatus in which the lock of pivotal motion of the operating lever can be released by descending a lock-pin rod arranged within the operation lever with operating a push knob mounted on the operating knob. There has been disclosed in a patent document (e.g. Japanese Laid-open Patent Publication No. 166830/1996) a speed change operation apparatus which can suppress operation noise generated during operation of the push knob. According to the speed change operating apparatus of this prior art the suppression of generation of the operation noise is performed by forming the entire push knob of elastomer.

### SUMMARY OF THE INVENTION

### Disclosure of the Invention

### Problems to be solved by the Invention

However the push knob formed entirely of elastomer has a following problem. That is, when the entire push knob is formed of relatively soft resin it is difficult to keep the strength or rigidity of the push knob, on the contrary when the entire push knob is formed of relatively hard resin it is difficult to effectively suppress the operation noise.

It is, therefore, an object of the present invention to provide a speed change operation apparatus for a vehicle which can both suppress the operation noise of the push knob and keep a necessary strength and rigidity of the push knob.

### Means for solving the problems

For achieving the object of the present invention, there is provided according the present invention of claim 1, a speed change operation apparatus for a vehicle comprising an operating lever for performing speed change operation of a transmission of a vehicle by a pivotal operation of the operating lever; an operating knob secured on the tip end of the operating lever and adapted to be gripped by a driver of vehicle; and a push knob mounted on the operation knob and adapted to be actuated by a driver to descent a lock-pin rod arranged within the operating lever characterized in that the push knob is outsert-molded by soft resin at its first portion abutting the lock-pin rod when the push knob is actuated or at its second portion abutting the operating knob after the actuation of the push knob.

It is preferable as defined in claim 2 that the soft resin outsert-molded at the first portion or the second portion has a ribbed configuration.

It is preferable as defined in claim 3 that the push knob is pivotally mounted within the operating knob and outsert-molded by the soft resin at its third portion in which a pivotal shaft aperture through which a pivotal shaft of the push knob is inserted is formed.

It is preferable as defined in claim 4 that the push knob is formed with portions to be held by molds and a holding pin, and that the external surface of the push knob is placed at the outside of the molds and the first and second portions are placed within a cavity during the outsert-molding the push knob with the soft resin by the molds.

### Effects of the Invention

According to the present invention of claim1 since the push knob is outsert-molded by soft resin at its first portion abutting the lock-pin rod when the push knob is actuated or at its second portion abutting the operating knob after the actuation of the push knob, it is possible both to suppress the operation noise of the push knob and to keep a necessary strength and rigidity of the push knob.

According to the present invention of claim 2 since the soft resin outsert-molded at the first portion or the second portion has a ribbed configuration, it is possible to improve the cushion nature of the push knob and to further suppress the operation noise thereof.

According to the present invention of claim 3, since the push knob is pivotally mounted within the operating knob and outsert-molded by the soft resin at its third portion in which a pivotal shaft aperture through which a pivotal shaft of the push knob is inserted is formed, it is possible to prevent generation of rattle between the pivotal shaft and the pivotal shaft aperture and thus to further suppress the operation noise of the push knob. Although the rattle would be generated between the pivotal shaft and the pivotal shaft aperture, the operation noise can be suppressed according to the present invention.

According to the present invention of claim 4, since the push knob is formed with portions to be held by molds and a holding pin, and since the external surface of the push knob is placed at the outside of the molds and the first and second portions are placed within a cavity during the outsert-molding the push knob with the soft resin by the molds, it is possible to prevent the push knob from being damaged during outsert-molding of the push knob.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view of the speed change operation apparatus for a vehicle of the present invention;
Fig. 2 is a perspective view of the push knob used in the speed change operation apparatus for a vehicle of Fig. 1;
Fig. 3 is a plane view and a side elevation view of the push knob;
Fig. 4 is a cross-sectional view taken along a line IV-IV of Fig. 3;
Fig. 5 is a cross-sectional view taken along a line V-V of Fig. 3;
Fig. 6 a schematic view showing molds used in the outsert-molding of the push knob; and
Fig. 7 is a plane view showing molds used in the outsert-molding of the push knob.

### DESCRIPTION OF THE PREFERRED EMBODIMENTS

### Best mode for carrying out the Invention

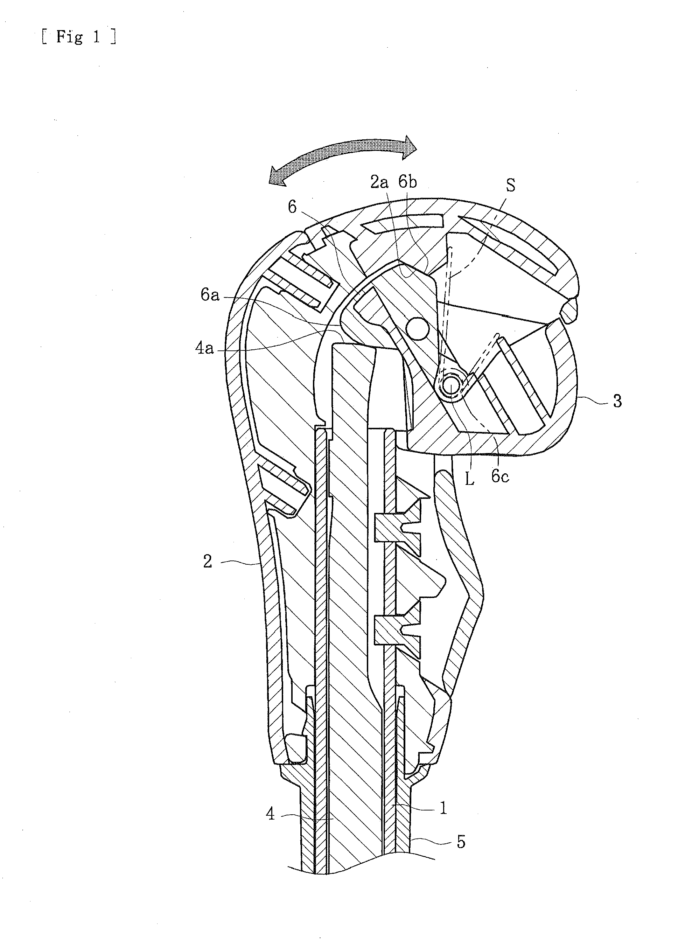

Preferable embodiments of the present invention will be hereinafter described with reference to the drawings. The speed change operation apparatus for a vehicle of one embodiment of the present invention is used for performing speed change operation of a transmission of a vehicle and comprises, as shown in Fig. 1, an operating lever 1 pivotally operated by a driver, an operating knob 2 mounted on the tip end of the operating lever 1, and a push knob 3 mounted on the operating knob 2.

The operating lever 1 is pivotally mounted on a body (not shown) of the speed change operation apparatus adapted to be mounted on a body of a vehicle to perform the speed change operation of a transmission (not shown) of a vehicle by pivotally moving the operating lever 1 along a direction shown by an arrow in Fig. 1. The operating lever 1 comprises a cylindrical member into which a lock-pin rod 4 described later more in detail is inserted.

The operating knob 2 gripped by a driver is mounted on a tip end (top end) of the operating lever 1 and the push knob 3 is pivotally mounted on the operating knob 2 at the front side thereof. More particularly the push knob 3 pivots around a pivotal shaft "L" to descend the lock-pin rod 4.

The lock-pin rod 4 is structured so that it is engaged with a body (not shown) of the speed change operation apparatus when the operating lever 1 is positioned at a predetermined position to prevent the pivotal motion of the operating lever 1. However the pivotal motion of the operating lever 1 is permitted when the lock-pin rod 4 is descended by pivotally moving the push knob 3. A cover 5 has a configuration continuously extending from the bottom end of the operating knob 2 to cover a circumferential surface of the operating lever 1.

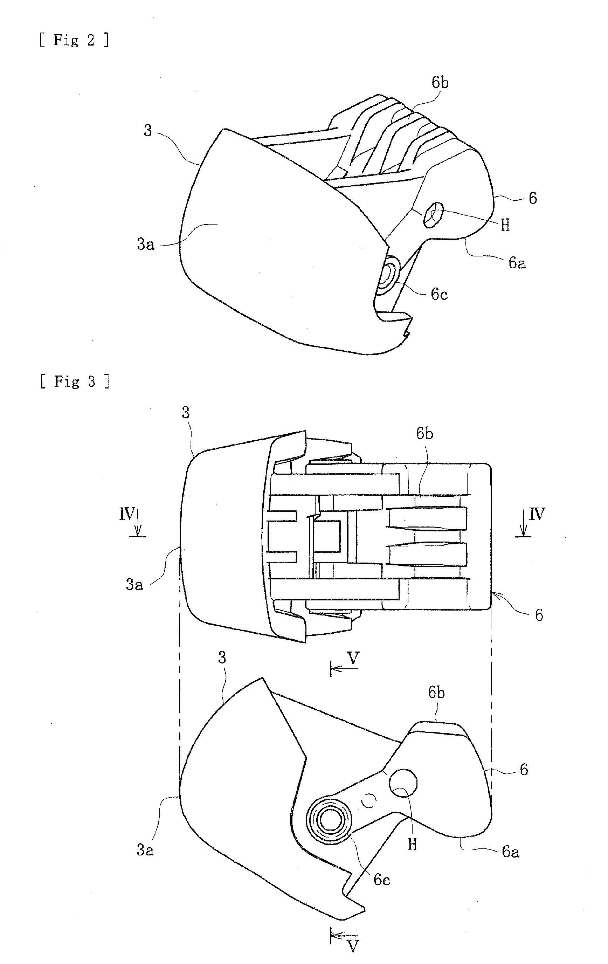

The push knob 3 of the present invention has a surface 3a which projects from the operating knob 2 when mounted thereon and the back side opposite to the surface 3a is outsert-molded by soft resin 6 (i.e. the back side of the push knob 3 is insert-molded in the soft resin 6). The soft resin 6 comprises resin (e.g. elastomer) having cushion nature and characteristics softer than the material (e.g. hard resin such as ABS etc.) of the push knob 3. The push knob 3 has as shown in Figs. 2~4 a first portion 6a, a second portion 6b and a third portion 6c.

The first portion 6a is that which abuts the top end 4a of the lock-pin rod 4 when the push knob 3 is operated, and the second portion 6b is that which abuts a predetermined portion 2a of the operating knob 2 after the operation of the push knob 3. The lock-pin rod 4 is usually urged upward and the push knob 3 is also urged by a spring "S" toward its initial position (position before the pivotal operation of the push knob 3). Accordingly the push knob 3 can be returned to its initial position by said urging forces after its operation and can abut the predetermined portion 2a within the operating knob 2.

According to the present invention since the push knob 3 is covered (i.e. outsert-molded) by the soft resin 6 rich of cushion nature at its first portion 6a which abuts the lock-pin rod 4 when the push knob 3 is operated and at its second portion 6b which abuts the operation knob 2 after the operation of the push knob 3, the operation noise of the push knob 3 generated during its operation can be suppressed. It is of course that necessary strength and rigidity of the push knob 3 can be kept since the push knob 3 itself is made of hard resin such as ABS etc.

In addition according to the present invention the second portion 6b is formed as having a ribbed configuration. This enables to improve the cushion nature and thus to further suppress the operation noise of the push knob 3. In the illustrated embodiment although it is shown that the second portion 6b has the ribbed configuration, it may be possible to provide the first portion 6a with the ribbed configuration or to provide both the first and second portions 6a, 6b with ribbed configuration.

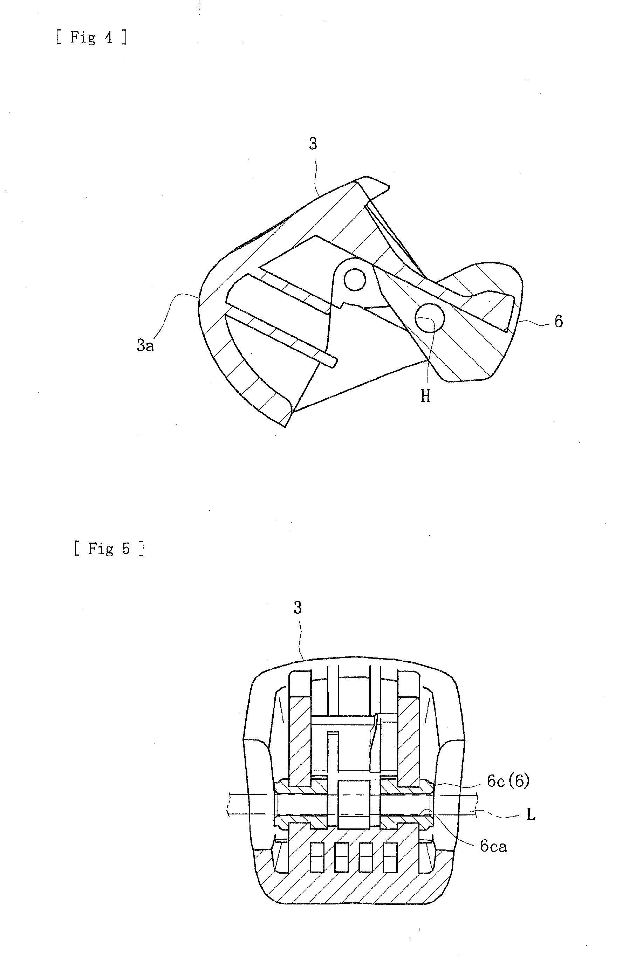

The third portion 6c is formed integrally with the first and second portions 6a, 6b and is formed as shown in Fig.5 with a pivotal shaft aperture 6ca through which a pivotal shaft "L" of the push knob 3 is inserted is formed. The portion through which the pivotal shaft "L" is inserted is partially filled with the soft resin 6. This enables to prevent generation of rattle between the pivotal shaft "L" and the pivotal shaft aperture 6ca and thus to further suppress generation of the operation noise.

As can be seen from the description above since the push knob 3 is outsert-molded by the soft resin 6 at portions engaging or abutting other portions of the speed change operation apparatus, it can effectively absorb shocks and thus suppress the operation noise of the push knob 3. On the other hand since the push knob 3 itself is made of hard resin such as ABS etc., the strength and rigidity of the push knob 3 are also kept.

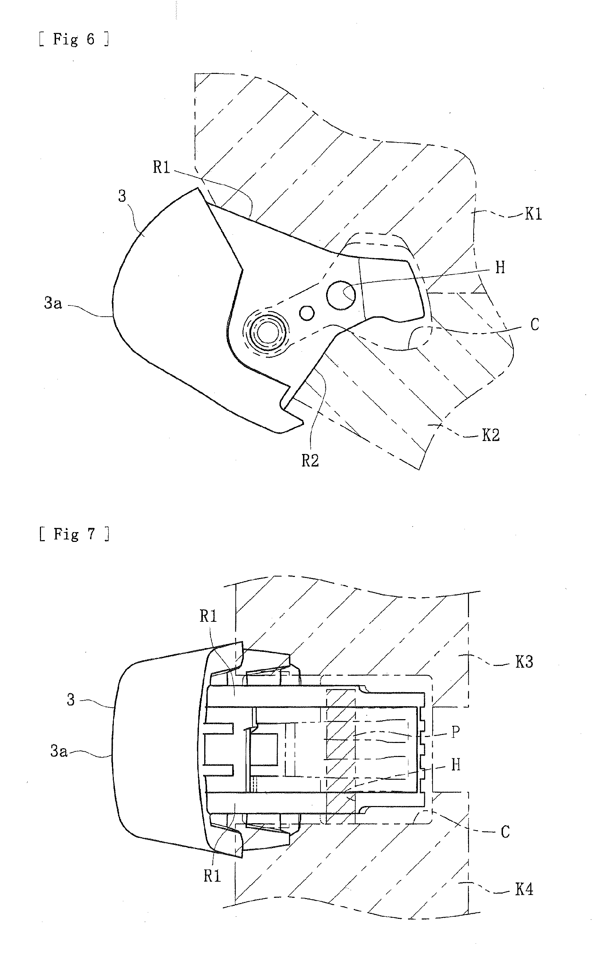

In addition the push knob 3 is formed with portions of the push knob 3 to be held by molds during the outsert-molding of the soft resin 6 on the push knob 3 so that the surface 3a of the push knob 3 is placed at the outside of the molds and the first, second and third portions 6a, 6b, 6c are placed within a cavity "C" of the molds during the outsert-molding of the push knob 3. More particularly said portions of the push knob 3 to be held by molds during the outsert-molding are outline portions R1, R2 and a bore "H" of the push knob 3 as shown in Figs. 6 and 7. During the outsert-molding process the outline portions R1, R2 are sandwiched and held by molds K1, K2 and a holding pin "P" extending from a mold K4 is inserted into the bore "H" to hold the push knob 3.

The molds K1~K4 are molds for outsert-molding the soft resin 6 on the push knob 3 and form the cavity "C" when they are closed each other. The outsert-molding can be performed by charging the cavity "C" with molten soft resin 6 and then by cooling and solidifying the resin. During which since the surface 3a of the push knob 3 is held by the molds K1, K2 and the pin "P" via the outline portions R1, R2 and the bore "H" so that the surface 3a of the push knob 3 is kept outside the molds K1~K4, it is possible to prevent the surface 3a from being damaged by the molds.

It should be understood that the technical effect of preventing the surface 3a from being damaged is valuable since the surface 3a of the push knob 3 has various decorated treatments coming in sight. Other portions of the push knob 3 may be used for holding the push knob 3 in place of the portions R1, R2 , H.

According to the present invention since the first and second portions 6a, 6b respectively abutting the lock-pin rod 4 and the operating knob 2 during operation of the push knob 3 are outsert-molded by the soft resin 6, it is possible to suppress the operation noise of the push knob 3 and keep the necessary strength and rigidity thereof. In addition since the first, second and third portions 6a, 6b and 6c can be integrally outsert-molded, it is possible to reduce manufacturing steps as compared with a method of forming these portions separately.

Although the present invention has been described with reference to the preferred embodiment, it should be appreciated that the present invention is not limited to the illustrated and described embodiment. For example, the present invention may be applied to any push knob in which only the first and second portions 6a, 6b are formed (i.e. that the third portion 6c is not formed) or either one of the first, second or third portion 6a, 6b or 6c is formed. In addition although the push knob 3 pivotal around the pivotal shaft "L" is illustrated, the present invention can be applied to other type of push knob such as a sliding type push knob.

### Applicability in Industries

The speed change operation apparatus for a vehicle of the present invention can be applied to any push knob having a different outline configuration or additional functions if it is characterized in that the push knob is outsert-molded by soft resin at its first portion abutting the lock-pin rod when the push knob is actuated or at its second portion abutting the operating knob after the actuation of the push knob.

## Claims

1. A speed change operation apparatus for a vehicle comprising:
an operating lever (1) for performing speed change operation of a transmission of a vehicle by a pivotal operation of the operating lever (1);
an operating knob (2) secured on the tip end of the operating lever (1) and adapted to be gripped by a driver of vehicle; and
a push knob (3) mounted on the operation knob (2) and adapted to be actuated by a driver to descent a lock-pin rod (4) arranged within the operating lever (1)
**characterized in:**
**that** the push knob (3) is outsert-molded by soft resin (6) at its first portion (6a) abutting the lock-pin rod (4) when the push knob (3) is actuated or at its second portion (6b) abutting the operating knob (2) after the actuation of the push knob (3).

2. A speed change operation apparatus for a vehicle of claim 1 wherein the soft resin (6) outsert-molded at the first portion (6a) or the second portion (6b) has a ribbed configuration.

3. A speed change operation apparatus for a vehicle of claim 1 or 2 wherein the push knob (3) is pivotally mounted within the operating knob (2) and outsert-molded by the soft resin (6) at its third portion (6c) in which a pivotal shaft aperture (6ca) through which a pivotal shaft (L) of the push knob 3 is inserted is formed.

4. A speed change operation apparatus for a vehicle of any one of claims 1~3 wherein the push knob (3) is formed with portions (R1, R2, H) to be held by molds (K1~K4) and a holding pin (P), and wherein the external surface (3a) of the push knob (3) is placed at the outside of the molds (K1~K4) and the first and second portions (6a, 6b) are placed within a cavity (C) during the outsert-molding the push knob (3) with the soft resin (6) by the molds (K1~K4).
